# EUROPEAN PATENT APPLICATION

(11) **EP 2 902 219 A1**
(43) Date of publication of application: **05.08.2015**
(21) Application number: 13841627.6
(22) Date of filing: 05.04.2013
(51) Int. Cl.: B60C 27/06, B60C 27/10, B60C 27/14

(54) **ONE-TOUCH-TYPE SNOW CHAIN WHICH IS TO BE FIXED ONTO WHEEL AND WHICH IS COMPATIBLE WITH CARS AND TRUCKS**

(30) Priority: 27.09.2012 KR 20120107577
(71) Applicant: Chainda Co. Ltd, Asan-si, Gyeonggi-do 425-781 (KR)
(72) Inventor: RYU, Daeryung, Kimpo-si Gyeonggi-do 415-785 (KR)
(74) Representative: Mittler, Enrico
(86) International application number: PCT/KR2013/002840
(87) International publication number: WO 2014/051229

(57) **Abstract**

The present invention relates to a one-touch-type snow chain which is to be fixed onto a wheel and which is compatible with cars and trucks, including: a mounting plate that is mounted onto a wheel of a vehicle; multiple fixing stoppers that are coupled to one another at intervals along an edge of the mounting plate and have a first friction portion formed to extend so as to be in contact with an outer circumferential surface of a tire and generate friction with the ground; and a folding stopper which is coupled so as to be positioned between the fixing stoppers at the edge of the mounting plate, which has a second friction portion formed in to extend so as to be in contact with the outer circumferential surface of the tire and generate friction with the ground, which has a hinge coupling portion disposed such that the second friction portion can be separated outwardly from the outer circumferential surface of the tire, and which is returned by elastic force such that the second friction portion is in contact with the outer circumferential surface of the tire.

## Description

### TECHNICAL FIELD

The present invention relates to a one-touch-type snow chain which is fixed onto a wheel and is compatible with cars and trucks, and more particularly to a one-touch-type snow chain which is fixed onto the wheel, is compatible with cars and trucks, is easily mounted on a tire of a vehicle and has excellent slipping prevention efficiency.

### BACKGROUND ART

In general, a vehicle slipping prevention device prevents the vehicle from slipping on the snowy road, rainy road or icy road. The device includes the one-touch-type snow chain which is fixed onto the wheel, is compatible with cars and trucks and is mounted on the vehicle before a user drives on the icy road after the winter snow has fallen.

The conventional vehicle slipping prevention device has been disclosed in "a fastener having a function of a one-touch-type snow chain which is used for the vehicle tire, is fixed onto the wheel and is compatible with cars and trucks" of Korean Patent Application No. 10-2002-0072822. In the configuration of the tire slipping prevention fastener by using aluminum die casting or synthetic resin injection molding in order to prevent the tire from slipping by attaching the fastener to the lateral surface of the vehicle's tire, the conventional vehicle slipping prevention device includes a frame plate which is comprised of a circular plate by connection-poles formed at a radiation angle between the inner wheel plate and the outer wheel plate; a fastener bolt having a cap nut formed on one side thereof and a bolt formed on the other side thereof in order to fasten the frame plate to the wheel bolt of a tire wheel; and each stopper which is lever-operated by the hinge pin and is fastened to each outer end by the stopper gap adjusting bolts which have round heads and have been fastened to the points of the outer wheel plate which meet the connection-poles of the frame plate, and which has the inclined surface in the lower inside thereof and controls the gap of the tire with a lever action by contact. These components combined and configured such that they are plated with lustrous stainless steel in consideration of exterior and have a wheel decoration feature.

However, with regard to the conventional fastener having a function of a one-touch-type snow chain which is used for the vehicle tire, is fixed onto the wheel and is compatible with cars and trucks, all of the stoppers are hinge-coupled, and thus, durability is deteriorated. Therefore, reinforcing structures for all the hinge-coupling portions are required in order to solve the problem. Moreover, all of the stoppers are simply hinge-coupled, so that the snow chain is in weak contact with the tire and slipping prevention efficiency is deteriorated.

### DISCLOSURE

### Technical Problem

For the purpose of solving the above-described problems, according to the embodiment of the present invention, only a minimum number of the stoppers necessary for mounting on the tire are folded, so that most stoppers have their unique shapes and have excellent durability. Furthermore, the foldable stoppers come in close contact with the outer circumferential surface of the tire, and most stoppers come in close contact with the outer circumferential surface of the tire by their unique shapes. Accordingly, the snow chain of the present invention is in firm contact with the outer circumferential surface of the tire and has excellent slipping prevention efficiency.

Other objectives of the present invention will be easily understood by the following description of embodiments.

### Technical Solution

To obtain the objective described above, according to an aspect of the present invention, provided is a one-touch-type snow chain which is fixed onto a wheel and is compatible with cars and trucks. The snow chain includes: a mounting plate which is mounted on the wheel of a vehicle; a plurality of fixing stoppers which are coupled to an edge of the mounting plate and are spaced apart from each other by an interval and include an extended first friction portion which generates friction with the ground by contacting with an outer circumferential surface of a tire; and a folding stopper which is coupled to the edge of the mounting plate and is positioned between the fixing stopper and the mounting plate and include an extended second friction portion which generates friction with the ground by contacting with the outer circumferential surface of the tire. The second friction portion is spaced outwardly from the outer circumferential surface of the tire and returns to contact with the outer circumferential surface of the tire by an elastic force.

The fixing plate is radially coupled to the inside of the mounting plate in a sliding manner and includes a plurality of first saw teeth formed in the sliding direction and an extended first fastening hole. The mounting plate includes second saw teeth which are engaged with the first saw teeth and are formed on the bonding surface with the fixing stopper, a first coupling hole which is formed such that the mounting plate is coupled to the first fastening hole by means of a coupling member. When the second saw teeth have been engaged with the first saw teeth, a position in the first fastening hole where the mounting plate is coupled to the fixing plate is selected by the first coupling hole, so that the snow chain is mounted on tires having different diameters.

In the mounting plate, a mounting recess in which the folding stopper is mounted is formed on an outer surface of the mounting plate, a second fastening hole is formed in the mounting recess and extends in the radial direction of the mounting plate, and on the surface in which the second fastening hole is formed, a plurality of third saw teeth are arranged in the radial direction of the mounting plate. In the folding stopper, fourth saw teeth which are engaged with the third saw teeth are formed on one side of the folding stopper, which is mounted on the mounting recess, and a second coupling hole is formed in the folding stopper such that the folding stopper is coupled to the second fastening hole by means of a coupling member. When the fourth saw teeth have been engaged with the third saw teeth, a position in the second fastening hole where the folding stopper is coupled to the mounting plate is selected by the second coupling hole, so that the snow chain is mounted on tires having different diameters.

The folding stopper includes a hinge coupling unit which allows the second friction portion to be spaced outwardly from the outer circumferential surface of the tire, and a mounting member which is mounted in the mounting recess. The fourth saw teeth and the second coupling hole are formed on the mounting member respectively. A stopper member on which the second friction portion is formed is hinge-coupled to the mounting member by the hinge coupling unit. Both sides of a spring which is installed in the hinge coupling unit are supported to apply an elastic force to the mounting member and the stopper member.

The snow chain further includes: an adaptor which is mounted on the wheel and includes a coupling portion which is formed in the central portion of the adaptor and is coupled to the mounting plate; and an adaptor cover which is mounted on an outer surface of the adaptor and includes a through-hole formed therein so as to expose the coupling portion. A coupler which is coupled to the coupling portion through the through-hole is provided in the central portion of the mounting plate.

The snow chain further includes a fastening flange for mediating the coupling of the adaptor and the wheel of the truck. Advantageous effects

According to the one-touch-type snow chain which is fixed onto a wheel and is compatible with cars and trucks, only a minimum number of the stoppers necessary for mounting on the tire are folded, so that most stoppers have their unique shapes and have excellent durability. Furthermore, the foldable stoppers come in close contact with the outer circumferential surface of the tire, and most stoppers come in close contact with the outer circumferential surface of the tire by their unique shapes. Accordingly, the snow chain of the present invention is in firm contact with the outer circumferential surface of the tire and has excellent slipping prevention efficiency.

### BRIEF DESCRIPTION OF DRAWINGS

Fig. 1 is a plan view showing a one-touch-type snow chain which is fixed onto a wheel and is compatible with cars and trucks in accordance with an embodiment of the present invention;
Fig. 2 is a perspective view for describing the operation of the one-touch-type snow chain which is fixed onto a wheel and is compatible with cars and trucks in accordance with the embodiment of the present invention;
Fig. 3 is a perspective view showing a fixing stopper of the one-touch-type snow chain which is fixed onto a wheel and is compatible with cars and trucks in accordance with the embodiment of the present invention;
Fig. 4 is a perspective view showing a folding stopper of the one-touch-type snow chain which is fixed onto a wheel and is compatible with cars and trucks in accordance with the embodiment of the present invention;
Fig. 5 is a side view showing a folding stopper of the one-touch-type snow chain which is fixed onto a wheel and is compatible with cars and trucks in accordance with the embodiment of the present invention;
Fig. 6 is a plan view showing an adaptor and an adaptor cover of the one-touch-type snow chain which is fixed onto a wheel and is compatible with cars and trucks in accordance with the embodiment of the present invention;
Fig. 7 is a perspective view showing a coupler of the one-touch-type snow chain which is fixed onto a wheel and is compatible with cars and trucks in accordance with the embodiment of the present invention;
Fig. 8 is a bottom perspective view showing a coupler of the one-touch-type snow chain which is fixed onto a wheel and is compatible with cars and trucks in accordance with the embodiment of the present invention; and
Fig. 9 is a perspective view showing a fastening flange of the one-touch-type snow chain which is fixed onto a wheel and is compatible with cars and trucks in accordance with the embodiment of the present invention.

### BEST MODE

As the present invention can have various embodiments as well as can be diversely changed, specific embodiments will be illustrated in the drawings and described in detail. While the present invention is not limited to particular embodiments, all modification, equivalents and substitutes included in the spirit and scope of the present invention are understood to be included therein. The embodiments can be variously modified. The scope of the present invention is not limited to that of the following embodiments.

Hereafter, the embodiment of the present invention will be described in detail with reference to the accompanying drawings. The same or corresponding elements will be denoted by the same reference numerals irrespective of drawing numbers, and repetitive descriptions thereof will be omitted.

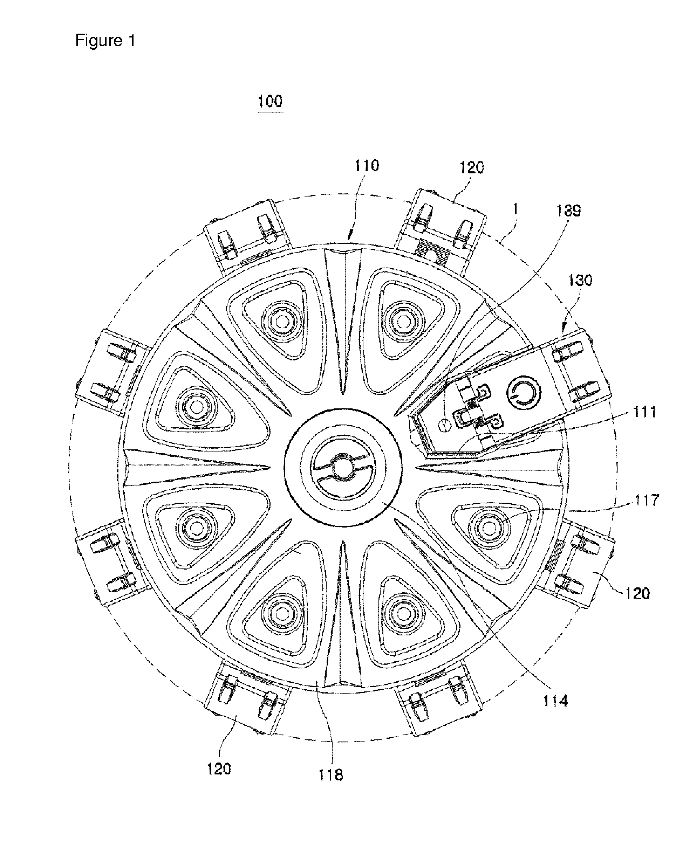

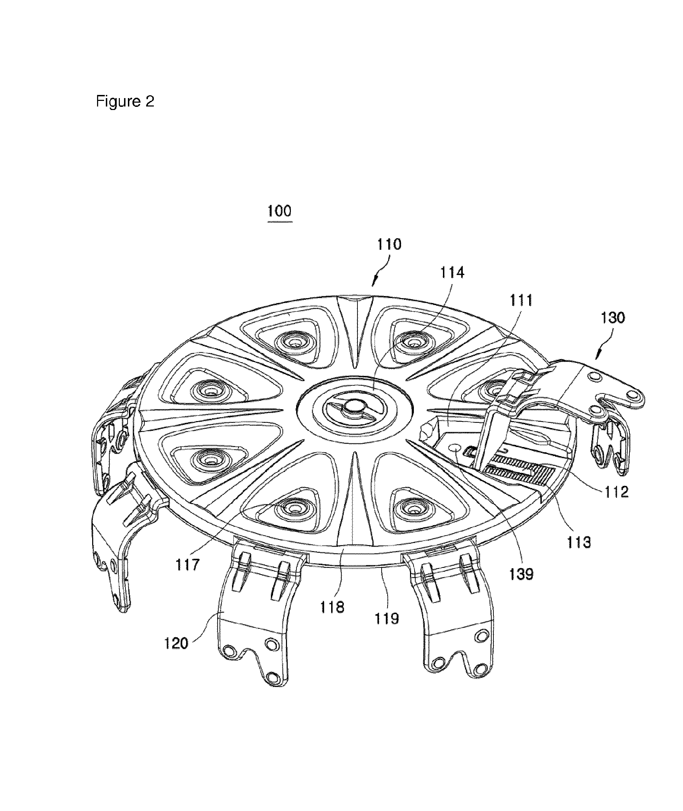

Fig. 1 is a plan view showing a one-touch-type snow chain which is fixed onto a wheel and is compatible with cars and trucks in accordance with an embodiment of the present invention. Fig. 2 is a perspective view for describing the operation of the one-touch-type snow chain which is fixed onto a wheel and is compatible with cars and trucks in accordance with the embodiment of the present invention.

Referring to Figs. 1 and 2, the one-touch-type snow chain 100 which is fixed onto a wheel and is compatible with cars and trucks in accordance with the embodiment of the present invention may include a mounting plate 110, a fixing stopper 120, and a folding stopper 130.

The mounting plate 110, together with the fixing stopper 120 and the folding stopper 130, may be manufactured with a metallic material, metal alloy or high strength synthetic resins. The mounting plate 110 may be mounted onto the wheel of a vehicle and may have, for example, a disk shape. A mounting recess 111 in which the folding stopper 130 is mounted may be formed on the outer surface of the mounting plate 110. A second fastening hole 112 may be formed in the mounting recess 111 and extend in the radial direction of the mounting plate 110. On the surface in which the second fastening hole 112 is formed, a plurality of third saw teeth 113 may be arranged in the radial direction of the mounting plate 110.

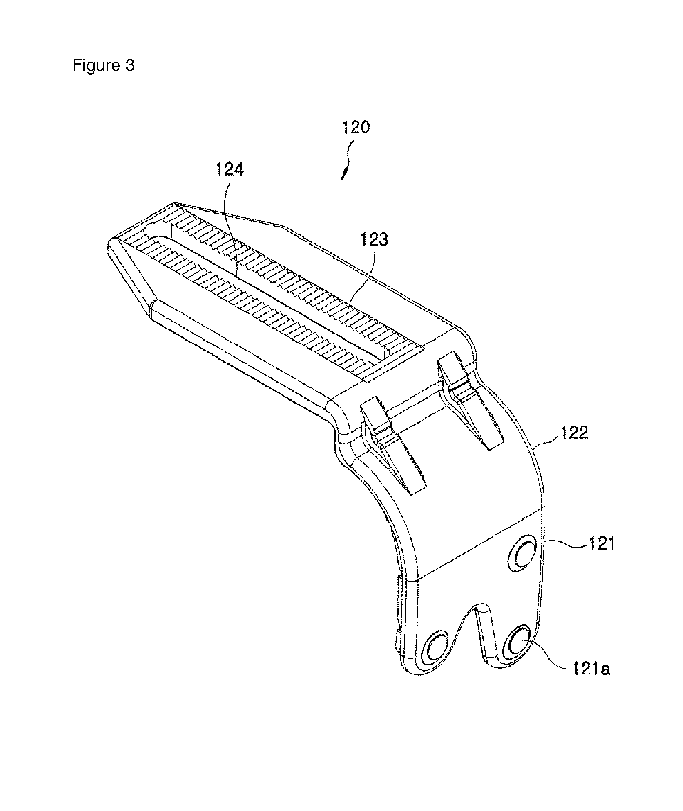

Referring to Fig. 3, the plurality of fixing stoppers 120 are coupled to the edge of the mounting plate 110 and are spaced apart from each other by an interval. The fixing stopper 120 includes a first friction portion 121 formed to extend. The first friction portion 121 contacts with the outer circumferential surface of a tire 1 (shown in Fig. 1) and generates friction with the ground. The fixing stopper 120 is bent by a bent portion 122, so that the first friction portion 121 may be formed. A plurality of friction projections 121 a may be fixed onto the first friction portion 121 in order that the tire has higher friction against the ground.

The plurality of fixing stoppers 120, together with the folding stopper 130, may be provided on the circumference of the mounting plate 110 and may be spaced apart from each other at a regular interval. The fixing stopper 120 may be radially coupled to the inside of the mounting plate 110 in a sliding manner. A plurality of first saw teeth 123 are formed in the sliding direction. A first fastening hole 124 is formed to extend.

In the mounting plate 110, second saw teeth (not shown) which are engaged with the first saw teeth 123 may be formed on the bonding surface with the fixing stopper 120. A first coupling hole (not shown) may be formed in the mounting plate 110 such that the mounting plate 110 is coupled to the first fastening hole 124 by means of a coupling member 117. When the second saw teeth (not shown) have been engaged with the first saw teeth 123, a position in the first fastening hole 124 where the mounting plate 110 is coupled to the fixing plate 120 is selected by the first coupling hole (not shown), so that the snow chain can be mounted on tires having different diameters.

The mounting plate 110 may include an outer plate 118 and an inner plate 119. The fixing stopper 120 is positioned between the outer plate 118 and the inner plate 119. The outer plate 118 is positioned on a side opposite to the contact surface of the mounting plate 110 to the tire, that is, on the outside of the mounting plate 110. The inner plate 119 is positioned on the contact surface of the mounting plate 110 to the tire, that is, on the inside of the mounting plate 110. The outer plate 118 and the inner plate 119 may be coupled to each other by the coupling member 117, for example, a bolt and nut. Also, in the mounting plate 110, a sliding groove (not shown) to which the fixing stopper 120 is slidingly coupled may be formed between the outer plate 118 and the inner plate 119. A plurality of the second saw teeth may be formed in the sliding groove.

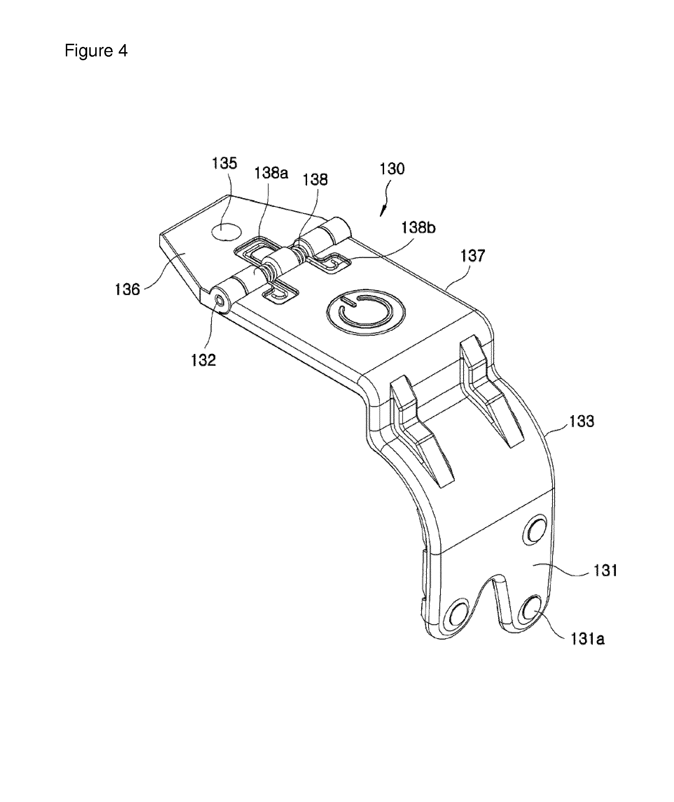

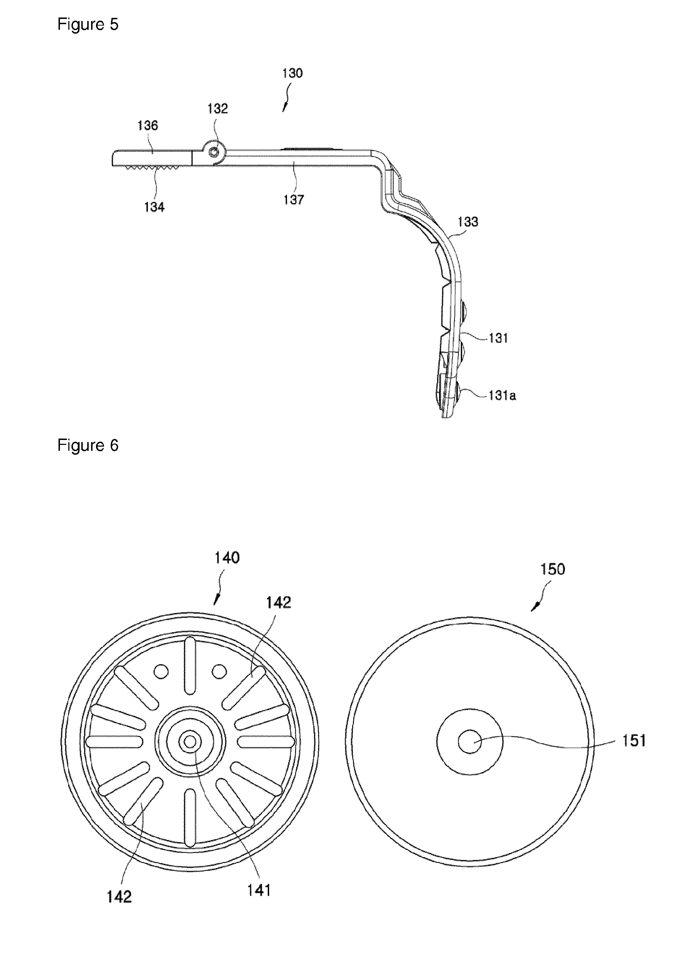

Referring to Figs. 4 and 5, the folding stopper 130 is coupled to the edge of the mounting plate 110 and is positioned between the fixing stopper 120 and the mounting plate 110. For example, the folding stopper 130 may be integrally formed. A second friction portion 131 is formed to extend. The second friction portion 131 contacts with the outer circumferential surface of the tire 1 (shown in Fig.1) and generates friction with the ground. The second friction portion 131 is spaced outwardly from the outer circumferential surface of the tire and returns to contact with the outer circumferential surface of the tire by an elastic force.

For example, the folding stopper 130 in itself consists of a leaf spring, so that the second friction portion 131 may be spaced outwardly from the outer circumferential surface of the tire. By such an elastic force of the leaf spring, the second friction portion 131 may return to contact with the outer circumferential surface of the tire. Therefore, the second friction portion 131 is spaced outwardly from the outer circumferential surface of the tire by a constant force, thereby making it easier to mount the snow chain on the tire through the folding stopper 130. For another example, like the embodiment, the folding stopper 130 may include a hinge coupling unit 132 which allows the second friction portion 131 to be spaced outwardly from the outer circumferential surface of the tire. The second friction portion 131 may return to contact with the outer circumferential surface of the tire by an elastic force of a below-described spring 138. Such an operation makes it easier to mount the snow chain on the tire.

The folding stopper 130 is bent by a bent portion 133, so that the second friction portion 131 may be formed. Also, a plurality of friction projections 131 a may be fixed onto the second friction portion 131 in order that the tire has higher friction against the ground.

Also, fourth saw teeth 134 which are engaged with the third saw teeth 113 may be formed on one side of the folding stopper 130, which is mounted on the mounting recess 111. A second coupling hole 135 may be formed in the folding stopper 130 such that the folding stopper 130 is coupled to the second fastening hole 112 by means of a coupling member 139, for example, a bolt, nut or rivet, etc. When the fourth saw teeth 134 have been engaged with the third saw teeth 113, a position in the second fastening hole 112 where the folding stopper 130 is coupled to the mounting plate 110 is selected by the second coupling hole 135, so that the position in the mounting plate 110 can be changed in the radial direction of the mounting plate 110, thereby mounting the snow chain on tires having different diameters.

The folding stopper 130 may include a mounting member 136 which is mounted in the mounting recess 111. The fourth saw teeth 134 and the second coupling hole 135 may be formed on the mounting member 136 respectively. A stopper member 137 on which the second friction portion 131 is formed is hinge-coupled to the mounting member 136 by the hinge coupling unit 132. Both sides 138a and 138b of the spring 138 which is installed in the hinge coupling unit 132 are supported to apply an elastic force to the mounting member 136 and the stopper member 137. Here, the mounting member 136 and the stopper member 137 can be hinge-coupled to each other by a hinge axis of the hinge coupling unit 132. Also, like the embodiment, a coil spring can be used as the spring 138. Unlike this, the leaf spring can be used as the spring 138. The coil spring is inserted into the hinge axis, and then both sides 138a and 138b press the mounting member 136 and the stopper member 137. As a result, the stopper member 137 returns to contact with the outer circumferential surface of the tire from the mounting member 136.

Referring to Fig. 6, an adaptor 140 and an adaptor cover 150 may be provided so as to mediate the coupling of the mounting plate 110 to the wheel of the vehicle.

The adaptor 140 may be mounted on the wheel. A coupling portion 141 for the coupling to the mounting plate 110 may be formed in the central portion of the adaptor 140. Here, in order to fasten or fix a below-described coupler 114 of the mounting plate 110, the coupling portion 141 may be composed of a male thread part or a female thread part or may have other configurations for fastening. Also, a plurality of third fastening holes 142 are formed in order that the adaptor 140 is fastened to a screw hole formed in the wheel by using a bolt. The third fastening hole 142 may be formed to extend in the radial direction of the adaptor 140 such that the adaptor 140 can be mounted on various wheels.

The adaptor cover 150 is mounted on the outer surface of the adaptor 140. A through-hole 151 is formed in the adaptor cover 150 so as to expose the coupling portion 141. For the purpose of mounting the adaptor cover 150 on the outer surface of the adaptor 140, for example, the edge of the adaptor cover 150 is fixed to the outer circumferential surface of the adaptor 140 in an interference fit manner. Besides, the adaptor cover 150 may be coupled to the adaptor 140 in an attachable and detachable manner by other various coupling structures. Meanwhile, the coupler 114 which is coupled to the coupling portion 141 through the through-hole 151 may be provided in the central portion of the mounting plate 110.

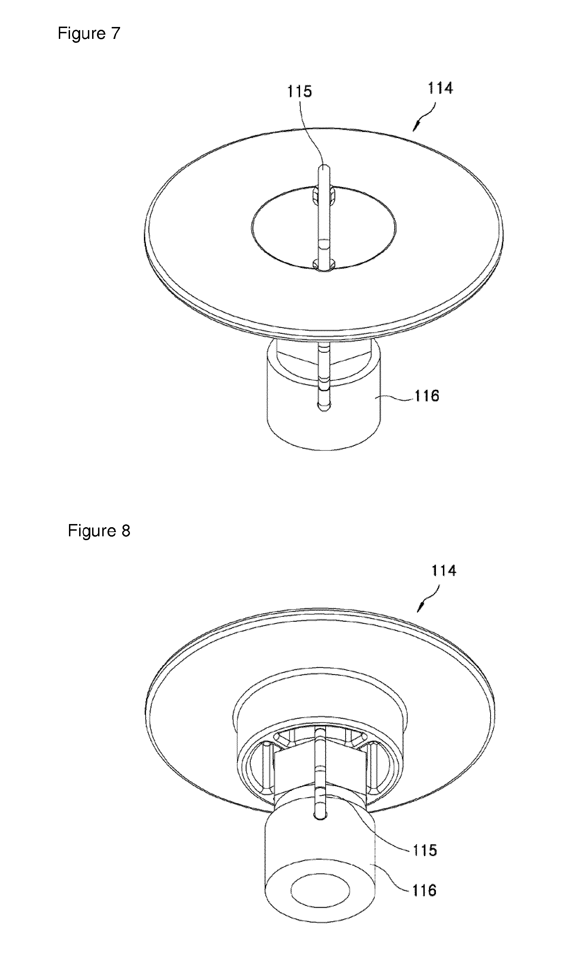

As shown in Figs. 7 and 8, the coupler 114 includes a clip 115 which is exposed to the outside and a fastener 116 which is coupled to the coupling portion 141. In order that the fastener 116 is screw-coupled to the coupling portion 141, the male thread part or the female thread part is formed on the fastener 116. Also, the fastener 116 may have a structure to be coupled to the coupling portion 141 in an attachable and detachable manner by other various methods. The fastener 116 may be fixed by the clip 115. Therefore, the adaptor cover 150 obtains the aesthetic appearance of the adaptor 140 on which no mounting plate 110 has been mounted. Also, the adaptor cover 150 is coupled to the adaptor 140 so as to prevent damages caused by foreign substances or dirt. The mounting plate 110 is coupled to the coupling portion 141 of the adaptor 140 through the through-hole 151. Therefore, there is no need to separate the adaptor cover 150 from the adaptor 140 in mounting the mounting plate 110, so that it is possible to prevent user's hand from being contaminated or hurt in cold weather.

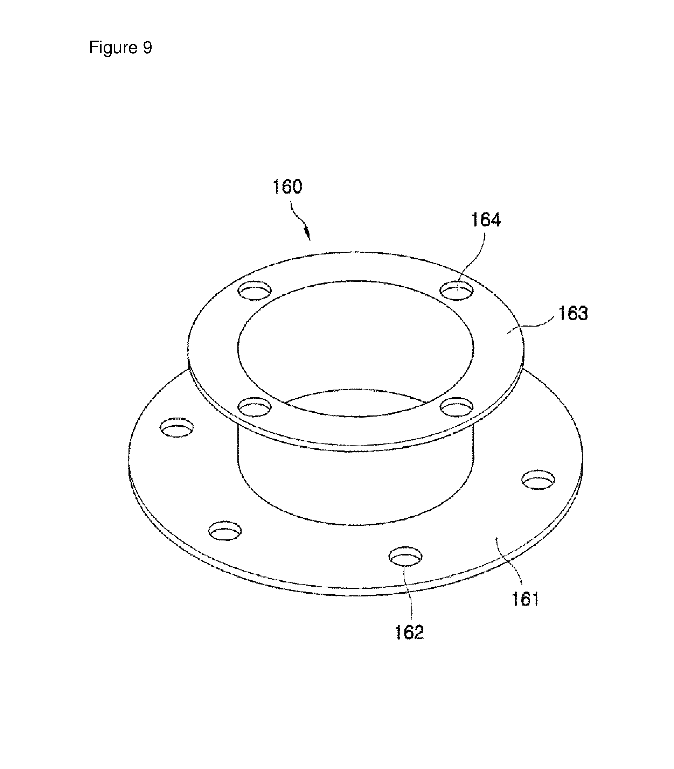

Referring to Fig. 9, the snow chain according to the embodiment of the present invention may further include a fastening flange 160 for mediating the coupling of the wheel of the truck and the adaptor 140. In case of the truck, in consideration of a fact that a screw fastener of the wheel is inserted into the inside of the wheel, the fastening flange 160 functions to mediate the extension of the screw fastener of the wheel to the side of the tire. For example, a first flange 161 of one end of the fastening flange 160 is fastened to the wheel of the truck by a bolt through a first screw hole 162, so that a second flange 163 of the other end of the fastening flange 160 is located on almost the same level as the side of the tire. Then, the second flange 163 is fastened to the third fastening hole 142 of the adaptor 140 by a bolt, etc., through a second screw hole 164 of the second flange 163. As a result, the adaptor 140 can be easily fixed to the wheel of the truck.

The one-touch-type snow chain which is fixed onto a wheel and is compatible with cars and trucks in accordance with the embodiment of the present invention has a structure in which only a minimum number of the stoppers of the stoppers are folded by a hinge-coupling, so that excellent strength of all of the stoppers can be maintained. As a result, the snow chain is in firm contact with the tire and is attached to and detached from the tire very easily.

While the embodiment of the present invention has been described with reference to the accompanying drawings, it can be understood that various modifications and changes can be made without departing from the spirit and scope of the present invention. Therefore, the scope of the present invention is not limited to the described embodiments and should be determined by the appended claims and equivalents thereto.

### MODE FOR INVENTION

According to an aspect of the present invention, provided is a one-touch-type snow chain which is fixed onto a wheel and is compatible with cars and trucks. The snow chain includes: a mounting plate which is mounted on the wheel of a vehicle; a plurality of fixing stoppers which are coupled to an edge of the mounting plate and are spaced apart from each other by an interval and include an extended first friction portion which generates friction with the ground by contacting with an outer circumferential surface of a tire; and a folding stopper which is coupled to the edge of the mounting plate and is positioned between the fixing stopper and the mounting plate and include an extended second friction portion which generates friction with the ground by contacting with the outer circumferential surface of the tire. The second friction portion is spaced outwardly from the outer circumferential surface of the tire and returns to contact with the outer circumferential surface of the tire by an elastic force.

The fixing plate is radially coupled to the inside of the mounting plate in a sliding manner and includes a plurality of first saw teeth formed in the sliding direction and an extended first fastening hole. The mounting plate includes second saw teeth which are engaged with the first saw teeth and are formed on the bonding surface with the fixing stopper, a first coupling hole which is formed such that the mounting plate is coupled to the first fastening hole by means of a coupling member. When the second saw teeth have been engaged with the first saw teeth, a position in the first fastening hole where the mounting plate is coupled to the fixing plate is selected by the first coupling hole, so that the snow chain is mounted on tires having different diameters.

In the mounting plate, a mounting recess in which the folding stopper is mounted is formed on an outer surface of the mounting plate, a second fastening hole is formed in the mounting recess and extends in the radial direction of the mounting plate, and on the surface in which the second fastening hole is formed, a plurality of third saw teeth are arranged in the radial direction of the mounting plate. In the folding stopper, fourth saw teeth which are engaged with the third saw teeth are formed on one side of the folding stopper, which is mounted on the mounting recess, and a second coupling hole is formed in the folding stopper such that the folding stopper is coupled to the second fastening hole by means of a coupling member. When the fourth saw teeth have been engaged with the third saw teeth, a position in the second fastening hole where the folding stopper is coupled to the mounting plate is selected by the second coupling hole, so that the snow chain is mounted on tires having different diameters.

The folding stopper includes a hinge coupling unit which allows the second friction portion to be spaced outwardly from the outer circumferential surface of the tire, and a mounting member which is mounted in the mounting recess. The fourth saw teeth and the second coupling hole are formed on the mounting member respectively. A stopper member on which the second friction portion is formed is hinge-coupled to the mounting member by the hinge coupling unit. Both sides of a spring which is installed in the hinge coupling unit are supported to apply an elastic force to the mounting member and the stopper member.

The snow chain further includes: an adaptor which is mounted on the wheel and includes a coupling portion which is formed in the central portion of the adaptor and is coupled to the mounting plate; and an adaptor cover which is mounted on an outer surface of the adaptor and includes a through-hole formed therein so as to expose the coupling portion. A coupler which is coupled to the coupling portion through the through-hole is provided in the central portion of the mounting plate.

The snow chain further includes a fastening flange for mediating the coupling of the adaptor and the wheel of the truck.

### INDUSTRIAL APPLICABILITY

The one-touch-type snow chain which is fixed onto a wheel and is compatible with cars and trucks in accordance with the embodiment of the present invention can be used in various vehicles.

| | | | |
|---|---|---|---|
| 110: | mounting plate | 111: | mounting recess |
| 112: | second fastening hole | 113: | third saw teeth |
| 114: | coupler | 115: | clip |
| 116: | fastener | 117: | coupling member |
| 118: | outer plate | 119: | inner plate |
| 120: | fixing stopper | 121: | first friction portion |
| 121a: | friction projection | 122: | bent portion |
| 123: | first saw teeth | 124: | first fastening hole |
| 130: | folding stopper | 131: | second friction portion |
| 131a: | friction projection | 132: | hinge coupling unit |
| 133: | bent portion | 134: | fourth saw teeth |
| 135: | second coupling hole | 136: | mounting member |
| 137: | stopper member | 138: | spring |
| 138a, 138b: | both sides | 139: | coupling member |
| 140: | adaptor | 141: | coupling portion |
| 142: | third fastening hole | 150: | adaptor cover |
| 151: | through-hole | 160: | fastening flange |
| 161: | first flange | 162: | first screw hole |
| 163: | second flange | 164: | second screw hole |

## Claims

1. A one-touch-type snow chain which is fixed onto a wheel and is compatible with cars and trucks, the snow chain comprising:
a mounting plate which is mounted on the wheel of a vehicle;
a plurality of fixing stoppers which are coupled to an edge of the mounting plate and are spaced apart from each other by an interval and comprise an extended first friction portion which generates friction with the ground by contacting with an outer circumferential surface of a tire; and
a folding stopper which is coupled to the edge of the mounting plate and is positioned between the fixing stopper and the mounting plate and comprise an extended second friction portion which generates friction with the ground by contacting with the outer circumferential surface of the tire, wherein the second friction portion is spaced outwardly from the outer circumferential surface of the tire and returns to contact with the outer circumferential surface of the tire by an elastic force.

2. The snow chain of claim 1,
wherein the fixing stopper is radially coupled to the inside of the mounting plate in a sliding manner and comprises a plurality of first saw teeth formed in the sliding direction and an extended first fastening hole,
wherein the mounting plate comprises second saw teeth which are engaged with the first saw teeth and are formed on the bonding surface with the fixing stopper, a first coupling hole which is formed such that the mounting plate is coupled to the first fastening hole by means of a coupling member, and wherein, when the second saw teeth have been engaged with the first saw teeth, a position in the first fastening hole where the mounting plate is coupled to the fixing plate is selected by the first coupling hole, so that the snow chain is mounted on tires having different diameters.

3. The snow chain of claim 1,
wherein, in the mounting plate, a mounting recess in which the folding stopper is mounted is formed on an outer surface of the mounting plate, a second fastening hole is formed in the mounting recess and extends in the radial direction of the mounting plate, and on the surface in which the second fastening hole is formed, a plurality of third saw teeth are arranged in the radial direction of the mounting plate,
and wherein, in the folding stopper, fourth saw teeth which are engaged with the third saw teeth are formed on one side of the folding stopper, which is mounted on the mounting recess, wherein a second coupling hole is formed in the folding stopper such that the folding stopper is coupled to the second fastening hole by means of a coupling member, and wherein, when the fourth saw teeth have been engaged with the third saw teeth, a position in the second fastening hole where the folding stopper is coupled to the mounting plate is selected by the second coupling hole, so that the snow chain is mounted on tires having different diameters.

4. The snow chain of claim 3,
wherein the folding stopper comprises a hinge coupling unit which allows the second friction portion to be spaced outwardly from the outer circumferential surface of the tire, and a mounting member which is mounted in the mounting recess, wherein the fourth saw teeth and the second coupling hole are formed on the mounting member respectively, wherein a stopper member on which the second friction portion is formed is hinge-coupled to the mounting member by the hinge coupling unit, and wherein both sides of a spring which is installed in the hinge coupling unit are supported to apply an elastic force to the mounting member and the stopper member.

5. The snow chain of any one of claims 1 to 3, further comprising:
an adaptor which is mounted on the wheel and comprises a coupling portion which is formed in the central portion of the adaptor and is coupled to the mounting plate; and
an adaptor cover which is mounted on an outer surface of the adaptor and comprises a through-hole formed therein so as to expose the coupling portion,
wherein a coupler which is coupled to the coupling portion through the through-hole is provided in the central portion of the mounting plate.

6. The snow chain of claim 5, further comprising a fastening flange for mediating the coupling of the adaptor and the wheel of the truck.
